# NEUE EUROPÄISCHE PATENTSCHRIFT

(11) **EP 1 310 520 B2**
(45) Veröffentlichungstag und Bekanntmachung des Hinweises auf die Entscheidung über den Einspruch: **09.03.2016**
(45) Hinweis auf die Patenterteilung: 24.08.2005
(21) Anmeldenummer: 03001742.0
(22) Anmeldetag: 15.05.1999
(51) Int. Cl.: C08J 9/14

(54) **Treibmittelzusammensetzung zur Herstellung von geschäumten thermoplastischen Kunststoffen**
Blowing agent composition for the production of foamed thermoplastic synthetic materials
Composition d'agents gonflants pour la fabrication de matières synthétiques thermoplastiques moussées

(30) Priorität: 22.05.1998 DE 19822944; 22.05.1998 DE 19822945
(43) Veröffentlichungstag der Anmeldung: 14.05.2003
(62) Teilanmeldung aus: 99924983.2
(73) Patentinhaber: Solvay Fluor GmbH, 30173 Hannover (DE)
(72) Erfinder: Krücke, Werner, 30163 Hannover (DE); Zipfel, Lothar, 30880 Laatzen (DE)
(74) Vertreter: Mross, Stefan P.M.

(56) Entgegenhaltungen:
- EP-A- 0 842 972
- EP-A1- 0 765 901
- EP-A1- 0 952 177
- WO-A-98/30623
- WO-A1-96/12758
- WO-A1-98/27145
- WO-A2-02/076176
- US-A- 5 496 866
- ZIPFEL L. ET AL: 'HFC-365mfc and HFC-245fa Progress in Application of New HFC Blowing Agents' POLYURETHANES WORLD CONGRESS, SEPTEMBER/OKTOBER 1997;"HFC-365MFC AND HFC-245FA PROGRESS IN APPLICATION OF NEW HFC BLOWING AGENTS" Oktober 1997, Seiten 176 - 184
- Konferenzartikel: Solvay; UTECH 1996; "An Update on the Development of New HFC Blowing Agents
- BARTHÉLÉMY P.P. ET AL: 'Latest Results in the Development of Next Generation HFC Blowing Agents' POLYURETHANE September 1995, Seiten 26 - 29
- STANLEY E. ET AL: 'Polyurethane System Optimization for Energy Efficiency' POLYURETHANES EXPO 1996, Seiten 328 - 333
- ROUX J.-D. ET AL: 'Evaluation of Aged HCFC-141 b Blown Foams and HFCs' UTECH 1994, Seiten 1 - 6
- ALBOUY A. ET AL: 'A Status Report on the Development of HFC Blowing Agents for Rigid Polyurethane Foams' ATOFINA November 1997, Seiten 1 - 10

## Beschreibung

Die Erfindung bezieht sich auf ein Verfahren zur Herstellung von Polyurethanhartschäumen und von geschäumten, thermoplastischen Kunststoffen.

Polyurethanschaumstoffe werden als wärme- bzw. geräuschdämmende Baumaterialien eingesetzt. Die Herstellung von Ein- und Mehrkomponentenpolyurethanhartschäumen mit Treibmitteln auf Basis von verflüssigtem CO2 wird in der WO 96/14354 offenbart.

Geschäumte thermoplastische Kunststoffe können, beispielsweise in Form von Platten, als wärme- bzw. geräuschisolierendes Bauteil eingesetzt werden. Die US-A 5,276,063 offenbart ein Verfahren zur Herstellung extrudierter, geschlossenzelliger alkenylaromatischer Polymere unter Verwendung eines Treibmittelgemisches, welches 1,1-Difluoroethan sowie ein weiteres Treibmittel mit geringerem Dampfdruck und noch höherer Löslichkeit im geschmolzenen Polymer vorsieht. Geeignete alkenylaromatische Polymere sind beispielsweise Polymere von Styrol, Alpha-Methylstyrol, Ethylstyrol, Vinylbenzol, Vinyltoluol, Chlorstyrol und Bromstyrol. Diese Polymere können gewünschtenfalls Copolymere wie Acrylsäure, Acrylnitril oder Butadien aufweisen. Die US-A 5,204,169 offenbart die Herstellung von geschäumten thermoplastischen Polymeren wie Polystyrol unter Verwendung von polyfluorierten Kohlenwasserstoffen mit 2 C-Atomen. Das geschäumte Material eignet sich insbesondere für die Nahrungsmittelverpackung. Die EP-A-0 436 847 offenbart die Herstellung von geschäumten thermoplastischen Formkörpern auf Basis von Polyphenylenether-Harzen. Als Treibmittel werden Kohlenwasserstoffe empfohlen. Als brauchbar werden auch halogenierte Kohlenwasserstoffe mit 1 oder 2 Kohlenstoffatomen erwähnt.

Aufgabe der vorliegenden Erfindung ist es, ein Verfahren zur Herstellung von Polyurethanhartschaumstoffen mittels eines ausgewählten, neuartigen, vorteilhaften Treibmittels anzugeben. Aufgabe der vorliegenden Erfindung ist es weiterhin, ein Verfahren zur Herstellung von geschäumten thermoplastischen Kunststoffen mittels eines neuartigen, vorteilhaften Treibmittels anzugeben. Diese Aufgaben werden durch das Verfahren und die Treibmittel der vorliegenden Erfindung gelöst.

Ausgangspunkt war die überraschende Erkenntnis, dass Pentafluorbutan, besonders 1,1,1,3,3-Pentafluorbutan (HFC-365mfc) im Gemisch mit bestimmten weiteren Treibmitteln eine für die Herstellung von Polyurethanhartschaumstoffen und geschäumten thermoplastischen Kunststoffen sehr gut geeignete Zusammensetzung liefert.

Ein Verfahren zur Herstellung von Polyurethanhartschaumstoffen und geschäumten thermoplastischen Kunststoffen mit Hilfe eines Treibmittels sieht vor, dass man als Treibmittel eine Zusammensetzung verwendet, die a) Pentafluorbutan, vorzugsweise 1,1,1,3,3-Pentafluorbutan (HFC-365mfc) und b) mindestens ein weiteres Treibmittel ausgewählt aus der Gruppe umfassend niedrig siedende, aliphatische Kohlenwasserstoffe, Ether und Halogenether; Difluormethan (HFC-32); Difluorethan, vorzugsweise 1,1-Difluorethan (HFC-152a); 1,1,2,2-Tetrafluorethan (HFC-134); 1,1,1,2-Tetrafluorethan (HFC-134a); Pentafluorpropan, vorzugsweise 1,1,1,3,3-Pentafluorpropan (HFC-245fa); Hexafluorpropan, vorzugsweise 1,1,2,3,3,3-Hexafluorpropan (HFC-236ea) oder 1,1,1,3,3,3-Hexafluorpropan (HFC-236fa); und Heptafluorpropan, vorzugsweise 1,1,1,2,3,3,3-Heptafluorpropan (HFC-227ea) enthält oder daraus besteht.

Gemäß der Erfindung verwendet man ein Treibmittel, welches aus 10 bis < 50 Gew.-% 1,1,1,3,3-Pentafluorbutan und > 50 Gew.-% 1,1,1,3,3-Pentafluorpropan besteht.

Der Begriff "niedrig siedende Kohlenwasserstoffe, Ether und Halogenether" bedeutet Verbindungen mit einem Siedepunkt unterhalb von 70 DEG C, vorzugsweise unterhalb von 55 DEG C. Geeignete Kohlenwasserstoffe sind solche mit 2 bis 6 C-Atomen, z. B. Ethan, Propan, Butan, Pentan und Hexan sowie deren Gemische. Dabei können isomerenreine Verbindungen oder Gemische von verschiedenen Isomeren eingesetzt werden. Unter "Butan" werden Gemische von n-Butan und i-Butan verstanden. Solche Gemische sind handelsüblich. Reines n-Butan oder i-Butan oder deren Gemisch in beliebiger Zusammensetzung ist auch verwendbar, aber sehr teuer. Analoges gilt für höhere Homologe wie Pentan etc.

Gut geeignet zur Anwendung im Verfahren sind auch Treibmittelzusammensetzungen, die zusätzlich zu HFC-365mfc und einem oder mehreren der oben unter b) angegebenen Treibmittel, wie Fluorkohlenwasserstoffe oder Kohlenwasserstoffe, außerdem verflüssigtes Kohlendioxid enthalten. Vorzugsweise sind dann 2 bis 50 Gew.-% an CO2 in der Treibmittelzusammensetzung enthalten. Außerdem kann die Treibmittelzusammensetzung noch bis zu 30 Gew.-% an Zusätzen enthalten, welche die Eigenschaften des herzustellenden Kunststoffes modifizieren.

Sehr gut geeignet als Treibmittel sind z. B. die folgenden Zusammensetzungen, die enthalten oder bestehen können aus (Beispiele für Zusammensetzungen mit Angabe der Gewichtsteile in Klammem):
HFC-365mfc und HFC-152a (70:30);
HFC-365mfc und HFC-32 (70:30);
HFC-365mfc, HFC-152a und CO2 (60:30:10);
HFC-365mfc, HFC-32 und CO2 (60:30:10);
HFC-365mfc, HFC-152a und Butan (60:30:10);
HFC-365mfc, HFC-32 und Butan (60:30:10);
HFC-365mfc, HFC-152a und HFC-134a (60:25:15);
HFC-365mfc, HFC-32 und HFC-134a (60:25:15);
HFC-365mfc und Dimethylether (80:20);
HFC-365mfc und Pentan (50:50);
HFC-365mfc und Propan (70:30);
HFC-365mfc und Ethan (90:10);
HFC-365mfc, Pentan und CO2 (45:45:10);
HFC-365mfc, Butan und CO2 (50:40:10);
HFC-365mfc, Propan und CO2 (70:20:10);
HFC-365mfc, Ethan und CO2 (90:5:5).

Andere Treibmittelzusammensetzungen enthalten 1,1,1,3,3-Pentafluorbutan und Difluormethan und/oder 1,1-Difluorethan, oder sie bestehen aus diesen Verbindungen. Ganz besonders setzt man Zusammensetzungen ein, welche 10 bis 70 Gew.-% des HFC-365mfc und 90 bis 30 Gew.-% des HFC-152a und/oder HFC-32 enthalten oder daraus bestehen.

Im Folgenden wird die Herstellung der PU-Hartschäume weiter erläutert.

Zu den hervorragend gut brauchbaren Flammschutzmitteln gehören beispielsweise reaktive Flammschutzmittel wie bromierte Polyole. Ebenfalls geeignet sind Flammschutzmittel auf Basis von organischen Phosphorverbindungen, beispielsweise Phosphatester und Phosphonester. Diese weisen organische Gruppen auf, die auch durch ein oder mehrere Halogenatome substituiert sein können. Die organischen Gruppen können aliphatischen oder aromatischen Charakter aufweisen. Sehr gut geeignet sind Phosphatester und Phosphonatester, die durch drei C1-C6-Alkylgruppen, die ein oder zwei Halogenatome aufweisen können, substituiert sind, beispielsweise Trischlorisopropylphosphat, Trischlorethylphosphat, Trischlorpropylphosphat, Dimethylethylphosphat, Trisdichlorisopropylphosphat, Dimethylmethylphosphonat, vorzugsweise Trischlorpropylphosphat.

Ein Verfahren zur Herstellung von Polyurethanhartschaumstoffen sieht vor, dass, sofern a) HFC-365mfc und b) 1,1,1,2-Tetrafluorethan (HFC-134a); 1,1,1,3,3-Pentafluorpropan (HFC-245fa); 1,1,1,3,3,3-Hexafluorpropan (HFC-236fa); oder 1,1,1,2,3,3,3-Heptafluorpropan (HFC-227ea), aber kein CO2, niedrig siedende, gegebenenfalls halogenierte Kohlenwasserstoffe, Ether oder halogenierte Ether enthalten sind, die Treibmittelzusammensetzung weniger als 50 Gew.-% an 1,1,1,3,3-Pentafluorbutan und mehr als 50 Gew.-% an 1,1,1,2-Tetrafluorethan; 1,1,1,3,3-Pentafluorpropan; 1,1,1,3,3,3-Hexafluorpropan oder 1,1,1,2,3,3,3-Heptafluorpropan enthält oder daraus besteht.

Die effektive Menge an Treibmittelzusammensetzung, die man im Verfahren einsetzt, kann durch einfache Handversuche ermittelt werden. Vorteilhaft wird die Treibmittelzusammensetzung in einer Menge von 1 bis 50 Gew.-%, bezogen auf die Gesamtmischung aus zu verschäumendem Kunststoff bzw. den Vorprodukten (Polyol, Isocyanat, Hilfsmittel) und Treibmittelzusammensetzung, eingesetzt.

Im Wesentlichen geschlossenzellige Polyurethanhartschaumstoffe, die durch einen Gehalt der im erfindungsgemässen Verfahren anzuwendenden Treibmittelzusammensetzung in den Zellen gekennzeichnet ist, können erhalten werden.

Die Herstellung solcher Schaumstoffe und die dafür verwendbaren Grundmaterialien und die Art der Schaumherstellung werden in der europäischen Patentanmeldung EP-A-0 381 986; in "Ullmanns Encyclopedia of Industrial Chemistry", 5. Auflage, Band A21, Seiten 665 - 680; den internationalen Patentanmeldungen WO 92/00345, 96/30439, 96/14354 und der deutschen Offenlegungsschrift DE 44 22 714 A1 offenbart. Man setzt Polyisocyanate beispielsweise mit 2 bis 4 Isocyanat-Gruppen ein.

Sie weisen einen aliphatischen Kohlenwasserstoffrest mit bis zu 18 C-Atomen, einen cycloaliphatischen Kohlenwasserstoffrest mit bis zu 15 C-Atomen, einen aromatischen Kohlenwasserstoffrest mit 6 bis 15 C-Atomen oder einen aliphatischen Kohlenwasserstoffrest mit 8 bis 15 C-Atomen auf. Technisch besonders bevorzugte Ausgangskomponenten sind beispielsweise Diphenylmethandiisocyanat, Polymethylenpolyphenylisocyanat und deren Mischungen. Es können auch sogenannte "modifizierte Polyisocyanate" eingesetzt werden, welche Carbodiimidgruppen, Urethangruppen, Allophanatgruppen, Isocyanuratgruppen, Harnstoffgruppen oder Biuretgruppen enthalten.

Weitere Ausgangskomponenten sind Verbindungen mit mindestens 2 gegenüber Isocyanaten reaktionsfähigen Wasserstoffatomen. Es handelt sich insbesondere um Verbindungen mit einem Molekulargewicht von 400 bis 10.000, welche vorzugsweise 2 bis 8 Hydroxylgruppen aufweisen und ausserdem Aminogruppen, Thiolgruppen oder Carboxylgruppen aufweisen können.

Gegebenenfalls können weitere Hilfs- und Zusatzmittel mitverwendet werden. Beispielsweise kann man zusätzlich chemische Treibmittel wie Wasser bzw. andere leicht flüchtige organische Substanzen als physikalisches Treibmittel einsetzen. Einsetzbar sind auch Katalysatoren wie beispielsweise tertiäre Amine, wie Dimethylcyclohexylamin, und/oder organische Metallverbindungen. Es können oberflächenaktive Zusatzstoffe wie Emulgatoren oder Schaumstabilisatoren, beispielsweise Siloxanpolyethercopolymere, Reaktionsverzögerer, Zellregler wie Paraffine, Fettalkohole oder Dimethylpolysiloxane, Pigmente, Farbstoffe, Flammschutzmittel wie Phosphatester oder Phosphonatester, wie beispielsweise Trischloriso-propylphosphat eingesetzt werden. Einsetzbar sind weiterhin Stabilisatoren gegen Alterungs- und Witterungseinflüsse, Weichmacher, Füllstoffe, Farbstoffe, Antistatika, Nukleisierungsmittel, Porenreglersubstanzen oder biozid wirksame Wirkstoffe.

Gut geeignete Katalysatoren sind beispielsweise in der internationalen Patentanmeldung WO 96/14354 genannt. Dazu zählen organische Amine, Aminoalkohole und Aminoether wie Morpholinverbindungen, beispielsweise Dimethylcyclohexylamin, Diethanolamin, 2-Dimethylaminoethyl-3-dimethylaminopropyl-ether, 2-Dimethylaminoethylether, 2,2-Dimorpholinodiethylether, N,N-Dimethylaminoethylmorpholin, N-Dimethylmorpholin. Auch metallorganische Verbindungen wie beispielsweise Zinn-, Kobalt- oder Eisenverbindungen sind brauchbar als Katalysator. Einsetzbar ist beispielsweise Zinndioctoat, Kobaltnaphthenat, Dibutylzinndilaurat und Eisenacetonylacetat.

Die Treibmittel können Hilfs- und Zusatzstoffe enthalten wie Wasser, einen oder mehrere Katalysatoren, Flammschutzmittel, Emulgatoren, Schaumstabilisatoren, Bindemittel, Vernetzungsmittel, UV-Stabilisatoren, Nukleirungsmittel und gegebenenfalls weitere Treibgase. Das Treibmittel kann z. B. den Propolymeren aus Polyol und Poly- oder Diisocyanat zugesetzt werden, welches dann verschäumt wird.

Vorteilhaft am Verfahren ist zunächst, dass die angewendete Treibmittelzusammensetzung günstige Eigenschaften im Hinblick auf ODP, GWP und Photosmog besitzt. Verglichen mit Polyurethanhartschaumstoffen, die mit reinen Kohlenwasserstoffen als Treibmittel hergestellt worden sind, zeichnen sich die nach dem Verfahren hergestellten Schaumstoffe durch eine bessere Wärmeleitzahl aus.

Ein besonderer Vorteil der nach dem Verfahren erhältlichen Polyurethanhartschaumstoffe kommt bei tieferen Temperaturen, zumeist unterhalb von etwa 15 DEG C, zum Tragen. Erstaunlicherweise besitzen die nach dem Verfahren erhältlichen Polyurethanhartschaumstoffe nicht nur eine günstigere Wärmeleitzahl (d. h. der Wärmeübergang ist niedriger) als Schaumstoffe, die aus reinen Kohlenwasserstoffen hergestellt wurden, sondern selbst gegenüber Schaumstoffen, die mit reinem Pentafluorbutan (HFC-365mfc) hergestellt worden sind, ist die Wärmeleitzahl geringer. In weitgehend geschlossenzelligen Polyurethanhartschaumstoffen, die mit Treibmittelgemischen, welche Pentafluorbutan, vorzugsweise 1,1,1,3,3-Pentafluorbutan und mindestens 1 der obengenannten weiteren Treibmittel aufweisen, macht sich bezüglich der Wärmeleitzahl, d. h. der Wärmedämmungsfähigkeit ein synergistischer Effekt der verwendeten Treibmittelmischungen bemerkbar. Die unter Verwendung von Pentafluorbutan, vorzugsweise HFC-365mfc und mindestens einem weiteren der oben angegebenen Treibmittel erhältlichen Polyurethanhartschaumstoffe eignen sich erhältlichen Polyurethanhartschaumstoffe eignen sich infolgedessen besonders gut zur Dämmung gegen Kälte in einem Temperaturbereich unterhalb von etwa 15 DEG C.

Im Folgenden wird die Herstellung thermoplastischer Schäume weiter erläutert.

Mit dem Verfahren kann man beispielsweise die in den oben erwähnten US-Patenten 5,204,169 und 5,276,063 genannten thermoplastischen Kunststoffe auf Basis von polymeren Alkenylaromaten und die in der EP-A-0 436 847 genannten thermoplastischen, auf Basis von Polyphenylenether-Verbindungen basierenden Kunststoffe verschäumen. Verschäumbar sind auch thermoplastische Kunststoffe auf Basis von Polyethylen, Polyvinylchlorid (PVC) und Polyethylenterephthalat (PET) und Polypropylen. Besonders bevorzugt setzt man im erfindungsgemässen Verfahren zu verschäumende thermoplastische Kunststoffe auf Basis von Polystyrol, Polyethylen und Polypropylen ein. Ganz besonders bevorzugt ist es, als thermoplastischen Kunststoff Polystyrol einzusetzen.

Ein Verfahren zur Herstellung von Kunststoffen auf Basis von Polystyrol oder Polyethylen sieht vor, dass, sofern a) HFC-365mfc und b) 1,1,1,2-Tetrafluorethan (HFC-134a); 1,1,1,3,3-Pentafluorpropan (HFC-245fa); 1,1,1,3,3,3-Hexafluorpropan (HFC-236fa); oder 1,1,1,2,3,3,3-Heptafluorpropan (HFC-227ea), aber kein CO2 enthalten sind, die Treibmittelzusammensetzung weniger als 50 Gew.-% an 1,1,1,3,3-Pentafluorbutan und mehr als 50 Gew.-% an 1,1,1,2-Tetrafluorethan; 1,1,1,3,3-Pentafluorpropan; 1,1,1,3,3,3-Hexafluorpropan oder 1,1,1,2,3,3,3-Heptafluorpropan enthält oder daraus besteht. Die gleiche Maßgabe gilt auch für diese Ausführungsform, sofern kein weiteres Treibmittel aus der Gruppe der niedrigsiedenden, gegebenenfalls halogenierten Kohlenwasserstoffe, Chlor und Halogenether enthalten ist. Bezüglich bevorzugter Treibmittel gelten die oben für PU-Schäume gemachten Ausführungen.

Vorteilhaft wird die Treibmittelzusammensetzung in einer Menge von 1 bis 30 Gew.-%, bezogen auf die Gesamtmischung aus zu verschäumendem thermoplastischen Kunststoff und Treibmittelzusammensetzung, eingesetzt.

Eine Treibmittelzusammensetzung, die im Verfahren eingesetzt werden kann, enthält oder besteht aus a) Pentafluorbutan, vorzugsweise 1,1,1,3,3-Pentafluorbutan (HFC-365mfc) und b) mindestens ein weiteres Treibmittel ausgewählt aus der Gruppe umfassend niedrig siedende aliphatische Kohlenwasserstoffe, Ether und Halogenether; Difluormethan (HFC-32); Difluorethan, vorzugsweise 1.1-Difluorethan (HFC-152a); Pentafluorpropan, vorzugsweise 1,1,1,3,3-Pentafluorpropan (HFC-245fa); Hexafluorpropan, vorzugsweise 1,1,2,3,3,3-Hexafluorpropan (HFC-236ea) oder 1,1,1,3,3,3-Hexafluorpropan (HFC-236fa); und Heptafluorpropan, vorzugsweise 1,1,1,2,3,3,3-Heptafluorpropan (HFC-227ea). Eine bevorzugte Zusammensetzung enthält oder besteht aus: a) 1,1,1,3,3-Pentafluorbutan (HFC-365mfc) und b) mindestens ein weiteres Treibmittel ausgewählt aus der Gruppe umfassend Ethan, Propan, Butan, Pentan; Difluormethan (HFC-32); Difluorethan (HFC-152a); 1,1,1,3,3-Pentafluorpropan (HFC-245fa); 1,1,1,3,3,3-Hexafluorpropan (HFC-236fa); und 1,1,1,2,3,3,3-Heptafluorpropan (HFC-227ea). Sie enthält vorzugsweise 5 bis 95 Gew.-%, insbesondere 10 bis 70 Gew.-% an 1,1,1,3,3-Pentafluorbutan (HFC-365mfc).

Sehr gut geeignete Zusammensetzungen enthalten oder bestehen aus: HFC-365mfc und HFC-152a; HFC-365mfc und HFC-32; HFC-365mfc, HF-152a und CO2; HFC-365mfc, HFC-32 und CO2; HFC-365mfc, HFC-152a und Butan; HFC-365mfc, HFC-32 und Butan; HFC-365mfc, HFC-32 und HFC-134a; HFC-365mfc und Dimethylether; HFC-365mfc und Pentan; HFC-365mfc und Propan; HFC-365mfc und Ethan; HFC-365mfc, Pentan und CO2; HFC-365mfc, Butan und CO2; HFC-365mfc, Propan und CO2; HFC-365mfc, Ethan und CO2.

Die Treibmittelzusammensetzung enthält bevorzugt 1,1,1,3,3-Pentafluorbutan (HFC-365mfc) und Difluormethan und/oder 1,1-Difluorethan (HFC-152a), oder sie besteht aus diesen Verbindungen. Insbesondere sind 10 bis 70 Gew.-% 1,1,1,3,3-Pentafluorbutan und 90 bis 30 Gew.-% 1,1-Difluorethan oder Difluormethan enthalten, oder sie besteht aus diesen Komponenten in den angegebenen Mengenbereichen.

Die Treibmittelzusammensetzung kann auch noch 2 bis 50 Gew.-% verflüssigtes Kohlendioxid enthalten.

Geeignet ist auch eine Treibmittelzusammensetzung, wobei, sofern a) HFC-365mfc und b) 1,1,1,2-Tetrafluorethan (HFC-134a); 1,1,1,3,3-Pentafluorpropan (HFC-245fa); 1,1,1,3,3,3-Hexafluorpropan (HFC-236fa); oder 1,1,1,2,3,3,3-Heptafluorpropan (HFC-227ea), aber kein CO2 enthalten sind, die Treibmittelzusammensetzung weniger als 50 Gew.-% an 1,1,1,3,3-Pentafluorbutan und mehr als 50 Gew.-% an 1,1,1,3,3-Pentafluorpropan; 1,1,1,3,3,3-Hexafluorpropan oder 1,1,1,2,3,3,3-Heptafluorpropan enthält oder daraus besteht. Die gleiche Maßgabe gilt auch, sofern kein weiteres Treibmittel aus der Gruppe der niedrig siedenden, aliphatischen Kohlenwasserstoffe, Ether und Halogenether enthalten ist.

Im Wesentlichen geschlossenzellige, geschäumte Kunststoffe, die durch einen Gehalt der offenbarten Treibmittelzusammensetzung in den Zellen gekennzeichnet ist, sind ebenfalls offenbart. Insbesondere handelt es sich um im Wesentlichen geschlossenzellige, geschäumte, thermoplastische Kunststoffe, vorzugsweise auf Basis von Polystyrol, Polyethylen, Polypropylen, PVC oder PET, insbesondere Polystyrol.

Die mit dem Verfahren erhältlichen thermoplastischen Schaumstoffe weisen den Vorteil auf, dass sie, verglichen mit der Verwendung von beispielsweise HFC-134a als Treibmittel, eine verbesserte Geschlossenzelligkeit aufweisen. Bei Polystyrol ist eine verbesserte Verarbeitbarkeit der Polystyrolschmelze im Vergleich zu der alleinigen Verwendung von HFC-134a festzustellen. Die Treibmittel weisen eine ausreichende Löslichkeit auf. Die Treibmittel haben kein ODP und ein geringes GWP. Der Einfluss auf die Bildung von Photosmog ist äußerst gering.

Ein besonderer Vorteil der offenbarten Hartschaumstoffe sind verbesserte Eigenschaften in Bezug auf die Wärmeleitfähigkeit. In den Zellen des Schaumstoffes ist, verglichen mit der alleinigen Verwendung von HFC-134a, HFC-152a und HFC-32 als Treibmittel, ein erhöhter Restgehalt an Treibmittel vorhanden.

Die folgenden Beispiele sollen die Erfindung weiter erläutern, ohne sie in ihrem Umfang einzuschränken.

### Beispiel 1:

### Herstellung von PU-Schaumstoffen

Zur Herstellung des PUR-Schaumstoffes wurde als eine Ausgangskomponente eine Polyolmischung, bestehend aus 40 Gewichtsteilen eines Ethylendiamin/Propylenoxid-Polyethers (OH-Zahl 480), 60 Gewichtsteile eines Sorbltol/Glycerin/Propylenoxid-Polyethers (OHZ 490), 1 Gewichtsteil Schaumstabilisator (Typ DC 193 der Dow Corning Corp.) und 1,5 Gewichtsteile Dimethylcyclohexylamin eingesetzt. Diphenylmethandiisocyanat wurde als Isocyanatkomponente in einer um 10 Gew.-% erhöhten stöchiometrischen Menge eingesetzt.

Die PUR-Schaumstoffe wurden auf einer Niederdruckanlage mit einer Austragsleistung von ca. 8 kg/min, mit der eine Dosierung von 3 Komponenten möglich ist, hergestellt. Als Mischaggregat diente ein statischer Mischer.

### a) Verwendung von HFC-365mfc/152a

Es wurde eine Treibmittelzusammensetzung in einer Menge von 30 Gewichtsteilen, bezogen auf Polyolkomponente, eingesetzt. Es bestand die Treibmittelzusammensetzung aus 70 Gewichtsteilen HFC-365mfc und 30 Gewichtsteilen HFC-152a. Zusätzlich wurde 1 Gewichtsteil Wasser als chemisches Treibmittel mit verwendet. Mit der Treibmittelzusammensetzung wurde ein PUR-Hartschaumstoff mit einer feinzelligen Struktur und einer Dichte von ca. 32 kg/m<3> mit geringer Schrumpfung hergestellt.

### b) Verwendung von HFC-365mfc/32

Es wurde eine Treibmittelzusammensetzung in einer Menge von 30 Gewichtsteilen, bezogen auf Polyolkomponente, eingesetzt. Es bestand die Treibmittelzusammensetzung aus 80 Gewichtsteilen HFC-365mfc und 20 Gewichtsteilen HFC-32. Zusätzlich wurde 1 Gewichtsteil Wasser als chemisches Treibmittel mit verwendet. Mit dieser Treibmittelzusammensetzung wurde ein PUR-Hartschaumstoff mit einer feinzelligen Struktur und einer Dichte von ca. 28 kg/m<3> mit geringer Schrumpfung hergestellt.

### c) Verwendung von HFC-365mfc/152a/CO2

Es wurde eine Treibmittelzusammensetzung in einer Menge von 22 Gewichtsteilen, bezogen auf Polyolkomponente, eingesetzt. Es bestand die Treibmittelzusammensetzung aus 70 Gewichtsteilen HFC-365mfc und 30 Gewichtsteilen HFC-152a. Zusätzlich zur Treibmittelzusammensetzung wurde gemäß - DE 44 39 082 - 8 Gewichtsteile verflüssigtes Kohlendioxid mit verwendet. Ferner wurde 1 Gewichtsteil Wasser als chemisches Treibmittel mit verwendet.

Mit der Treibmittelzusammensetzung wurde ein PUR-Hartschaumstoff mit einer feinzelligen Struktur und einer Dichte von ca. 26 kg/m<3> mit geringer Schrumpfung hergestellt.

### Beispiel 2:

### Herstellung eines Polystyrol-Schaumstoffes

### a) Verwendung von HFC-365mfc/152a

Es wurden 200 kg Polystyrol (Schmelzindex 3,0 - 110) mit 2 kg Talkum als Nukleierungsmittel vermischt und diese Mischung in eine übliche Extruderanlage eindosiert und aufgeschmolzen. In die Schmelzzone des Extruders wurden über eine Einspritzdüse in die Polystyrolschmelze ca. 8 Gew.-% eines Treibmittels, bezogen auf das Polystyrol, eindosiert. Die Treibmittelmischung enthielt 30 Gew.-% HFC-365mfc und 70 Gew.-% HFC-152a.

In der Mischzone wurde die Polystyrolschmelze mit der Treibmittelzusammensetzung homogen vermischt und anschließend die erhaltene Mischung über eine Düse extrudiert. Man erhielt einen geschlossenzelligen Schaumstoff von gleichmäßiger, feinzelliger Struktur.

Es wurden sowohl Polystyrol-Schaumfolien als auch Polystyrol-Schaumplatten hergestellt. Eine hergestellte Polystyrol-Schaumfolie besaß eine Dichte von 38 kg/m<3>, eine hergestellte Polystyrol-Schaumplatte eine Dichte von 35 kg/m<3>.

### b) Verwendung von HFC-365mfc/32

Wie unter Beispiel 2a) beschrieben, wurde in eine Polystyrolschmelze ca. 6 Gew.-% eines Treibmittels, bezogen auf Polystyrol, eindosiert. Die Treibmittelzusammensetzung enthielt 30 Gew.-% HFC-365mfc und 70 Gew.-% HFC-32. Eine hergestellte Polystyrolfolie besaß eine Dichte von 42 kg/m<3>, eine hergestellte Polystyrol-Schaumplatte eine Dichte von 39 kg/m<3>.

### c) Verwendung von HFC-365mfc/134a/152a

Wie unter Beispiel 2a) beschrieben, wurde in eine Polystyrolschmelze ca. 8,5 Gew.-% eines Treibmittels, bezogen auf Polystyrol, eindosiert. Die Treibmittelzusammensetzung enthielt 30 Gewichtsteile HFC-365mfc, 14 Gewichtsteile HFC-134a und 56 Gewichtsteile HFC-152a.

Eine hergestellte Polystyrolfolie besaß eine Dichte von 40 kg/m<3>, eine hergestellte Polystyrol-Schaumplatte eine Dichte von 38 kg/m<3>.

### d) Verwendung von HFC-365mfc/152a/CO2

Wie unter Beispiel 2a) beschrieben, wurde in eine Polystyrolschmelze ca. 5,5 Gew.-% eines Treibmittels, bezogen auf Polystyrol, eindosiert. Die Treibmittelzusammensetzung enthielt 30 Gewichtsteile HFC-365mfc, 70 Gewichtsteile HFC-152a. Zusätzlich zur Treibmittelzusammensetzung wurde gemäß - DE 44 39 082 - 8 Gewichtsteile verflüssigtes Kohlendioxid mit verwendet.

Eine hergestellte Polystyrolfolie besass eine Dichte von 36 kg/m<3>, eine hergestellte Polystyrol-Schaumplatte eine Dichte von 33 kg/m<3>.

### Beispiel 3:

### Herstellung eines Polyethylen-Schaumstoffes

### a) Verwendung von HFC-365mfc/152a

200 kg Polyethylen (Schmelzindex 3,5 - 150) wurden unter ähnlichen Bedingungen, wie in Beispiel 2 für Polystyrol beschrieben, extrudiert. Es wurden ca. 9 Gewichtsteile einer Treibmittelmischung, bezogen auf Polyethylen, eindosiert. Es wurde eine Treibmittelzusammensetzung aus 30 Gewichtsteilen HFC-365mfc und 70 Gewichtsteilen HFC-152a eingesetzt. Es wurde ein feinzelliger Polyethylen-Schaumstoff mit geringer Schrumpfung erhalten. Das hergestellte Polyethylen-Schaumrohr wies eine Dichte von 38 kg/m<3> auf.

## Patentansprüche

1. Verwendung einer Treibmittelzusammensetzung bestehend aus 10 bis < 50 Gew.-% 1,1,1,3,3-Pentafluorbutan (HFC 365mfc) und > 50 Gew.-% 1,1,1,3,3-Pentafluorpropan (HFC 245fa). zur Herstellung von Polyurethanschäumen.

## Claims

1. Use of a blowing agent composition consisting of 10 < 50% by weight 1,1,1,3,3-pentafluorobutane (HFC 365mfc) and >50% by weight 1,1,1,3,3-pentafluoropropane (HFC 245fa).

## Revendications

1. Utilisation d'une composition de produit moussant, constituée de 10 à < 50% par poids de 1,1,1,3,3-pentafluorobutane (HFC 365mfc) et de > 50% par poids de 1,1,1,3,3-pentafluoropropane (HFC 245fa) pour la production de mousses de polyuréthane.
